# EUROPEAN PATENT APPLICATION

(11) **EP 3 657 761 A1**
(43) Date of publication of application: **27.05.2020**
(21) Application number: 18208377.4
(22) Date of filing: 26.11.2018
(51) Int. Cl.: H04L 29/08, G06F 11/36, G06F 17/27, G06F 17/28

(54) **TESTING OF WEB-BASED PROCESSES**

(71) Applicant: Q-Way Ltd, Watford WD17 1HP (GB)
(72) Inventor: GHOSH, Ansuman, Edinburgh, EH12 8WU (GB); BHUSHETTY, Dipti, 8933 ES Leeuwarden (NL)
(74) Representative: Hanson, William Bennett

(57) **Abstract**

An automated method of testing a web-based process comprises the steps of:
- receiving a set of instructions from a human, the instructions comprising: a plurality of natural language operational tags, each defining an operation to be performed; and a plurality of natural language objects, each defining an element of a document presented for interaction, each operational tag being associated with one of the objects;
- extracting said operational tags and said objects from the instructions;
- performing the operations defined by the operational tags on the elements defined by the objects that are respectively associated with the operational tags, and
- returning a result of at least one of the operations defined by the operational tags.

## Description

### Background to the Invention

This invention relates to a method of testing a web-based process, such as a web page function located on the World Wide Web or on a server only accessible by a defined network.

A web page can be designed by a traditional, linear Waterfall model, or by a more adaptable model. In either case, a non-technical user will wish to test the functionality. Conventionally, the user provides a natural language document, describing one or more functions that the web page is to perform, to a test engineer. The engineer writes a script which is used to test the application.

A problem with existing scripts defining automated processes for testing functionality is that their meaning is not apparent to users unfamiliar with the language of the script.

This problem has been addressed by the providers of the Cucumber ® testing tool, which runs automated acceptance tests written in a behavior-driven development (BDD) style. A user can specify a behaviour to be tested using a plain language parser called Gherkin, which is readable by persons unfamiliar with programming languages.

Whilst Gherkin allows a user to specify a test in standard manner, it still requires a human test engineer to interpret the Gherkin specification, and write a script for Cucumber, which uses the Ruby programming language, this script again being unintelligible to the lay user.

If "record and play" approach is used, a script for testing a web-based application is recorded and run, and the results of the test are played to the lay user. However, since the user does not read the script, he or she cannot verify the exact nature of the test.

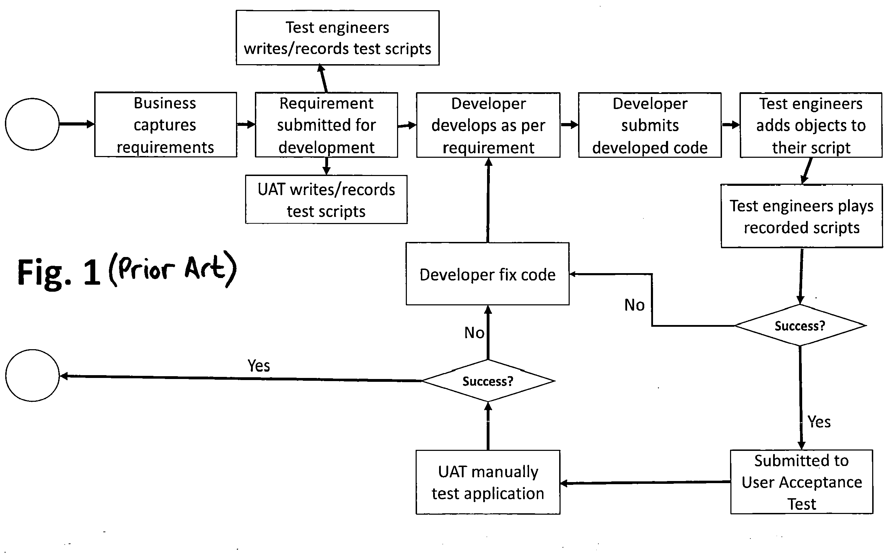

Figure 1 is a flow chart showing a typical web page development process. After specifying its requirements, the user, which may be a business, submits these to a developer, who develops an initial version of the page. At the same time, a test engineer writes and records a test script, and a user acceptance test (UAT) script, used for a second, manual level of testing, is also written and recorded.

The developer codes the page, using, for example, html (hypertext mark-up language), and submits the code to the test engineer, who adds elements of the code, such as path expressions for html objects, and test data, to the test script. The test script is run, and if errors are found, the developer corrects them and the test script is re-run. Finally the UAT script is followed, possibly by the lay user, as a final check for errors.

### Summary of the Invention

The present invention provides an automated method of testing a web-based process, comprising the steps of:
- receiving a set of instructions from a human, the instructions comprising: a plurality of natural language operational tags, each defining an operation to be performed; and a plurality of natural language objects, each defining an element of a document presented for interaction, each operational tag being associated with one of the objects;
- extracting said operational tags and said objects from the instructions;
- performing the operations defined by the operational tags on the elements defined by the objects that are respectively associated with the operational tags, and
- returning a result of at least one of the operations defined by the operational tags.

The operations defined by the natural language operational tags may include one or more of: navigating, selecting, actuating (e.g. by simulating clicking a mouse button), or verifying the presence of a document element.

The elements defined by the objects may include one or more of: an address of a document, which may be a web page; a hyperlink; a button; a text input box; data generated by the operation defined by the operational tag associated with the object in question; or data generated by a previous operation.

The document may by a web page, for example available on the World Wide Web.

The instructions may include test data, for entry into the document, and/or comprising an expected result of an operation. The test data may be presented as one or more data tags within the set of instructions, a test data file being provided to interpret the one or more data tags.

The invention also provides a computer program including: a plurality of natural language operational tags, each defining an operation to be performed; and a plurality of natural language objects, each defining an element of a document presented for interaction, each operational tag being associated with one of the objects; such that when the operations defined by the operational tags are performed on the elements defined by the objects that are respectively associated with the operational tags, a result of at least one of the operations defined by the operational tags is returned.

The program may include test data, for entry into the document, and/or comprising an expected result of an operation. The test data may be presented as one or more data tags, the program also including a test data file providing definitions of the one or more data tags.

### Brief Description of the Drawings

The invention will be described in more detail, by way of example only, with reference to the accompanying drawings, in which;
Figure 1 shows the known method of developing web pages described above; and
Figure 2 shows a method of developing web pages according to an embodiment of the invention.

### Detailed Description of Preferred Embodiments

The invention provides a natural language instruction set for a non-technical user to specify tests that a web based process must perform.

The instruction set includes operational tags that define commands or operations, and objects that define elements of a web page, such as its URL (universal resource locator), buttons, hyperlinks, data entry fields, and data generated or located by an operation. Each operational tag is followed by an object on which the operation is to be performed.

Examples given below show how a web site providing a database of companies could be tested. An first example of a script that could be written by a non-technical user is:

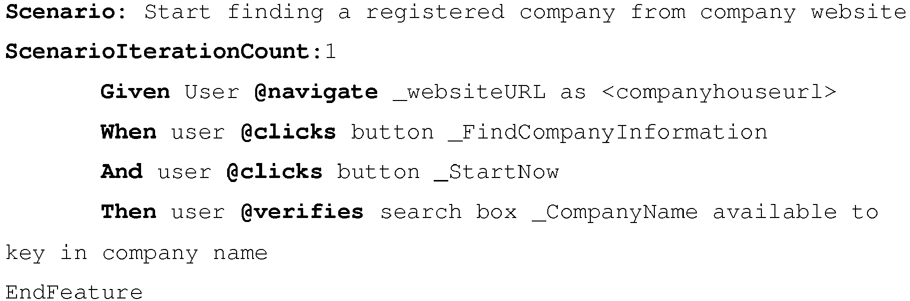

In the examples presented, a word preceded by "@" is an operational tag, a word preceded by an underscore is an object, and a word between pointy brackets is a data tag. Thus "**@navigate** _websiteURL as <companyhouseurl>" is a command to navigate, by entering into a URL field of a browser, an certain URL, which is identified here as "<companyhouseurl>". The actual URL can be defined in a separate test data file.

After having navigated to the page in question, the script commands clicking a button "_FindCompanyInformation" followed by clicking a further button "_StartNow". Finally there is a verification step that a search box "_CompanyName" is available.

Note that the words in the script other than the operational tags, objects and data tags are for information and are not read when the script is run.

The invention provides an engine that can parse the script and perform the test desired by the user. Returning to the example above, the engine causes a browser to open the page at the URL identified by <companyhouseurl>. Next, the engine simulates mouse clicks on the buttons "_FindCompanyInformation" and "_StartNow". Finally the engine verifies that a search box is made available for typing a company name for which the user wishes to search.

The example could continue by presenting further test scenarios: **Scenario:** Check when company name entered and searched, a list or no list is returned

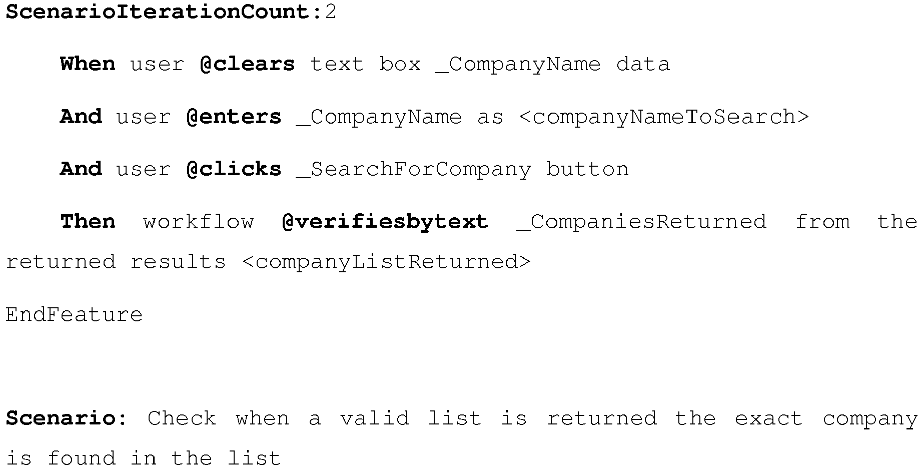

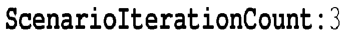

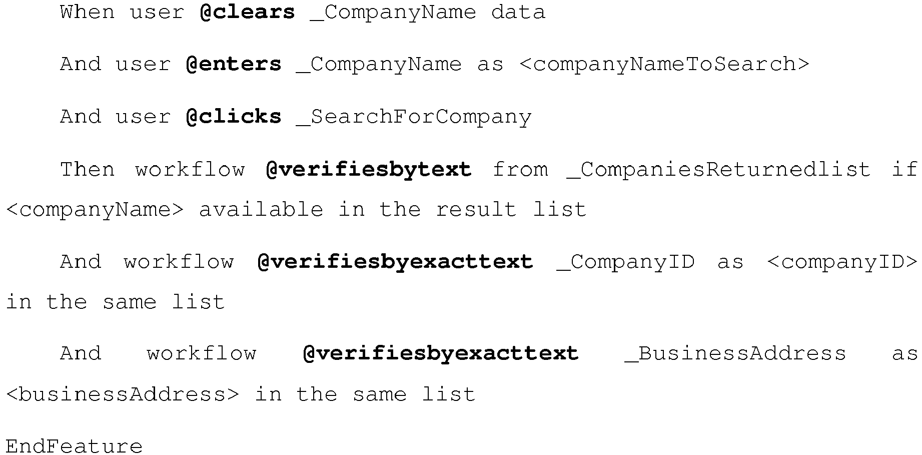

The second scenario above checks that a search for a company name returns data, provided that company name exists in the database. The third scenario checks that if the exact company name searched for exists, it is returned together with the address of the company.

Test data is specified for the data tags in the test scenarios. For the above examples, the test data could be as follows:

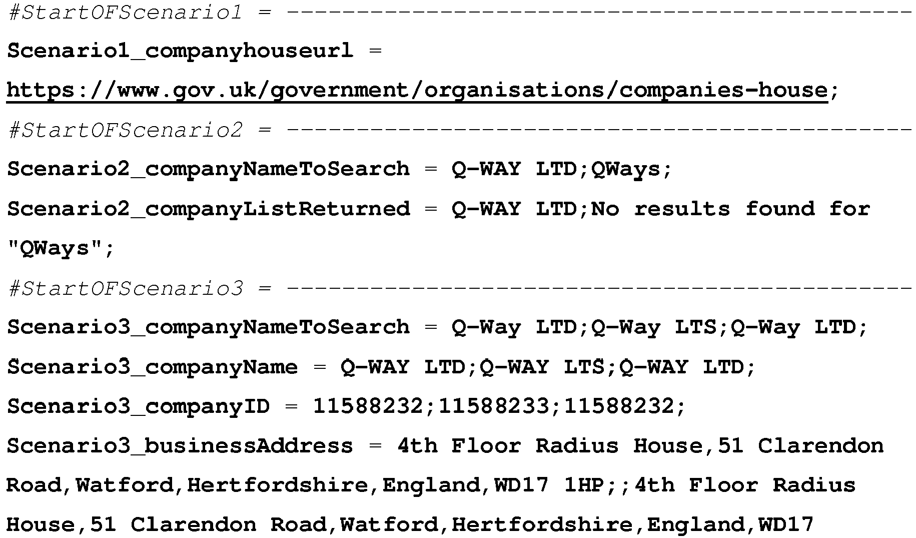

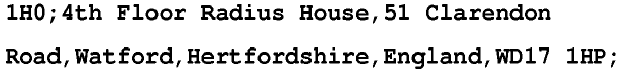

Using this test data, if a search is performed for the company "Q-Way Ltd" which is known to exist in the database, the test will confirm whether or not details relating to that company are retrieved. The correct expected results are provided in the test data file by the data tags "companyname" "companyID" and "businessAddress". Of course, the same scripted scenarios could be used with a different test data file to test different search criteria. Referring to scenario 1, using a different definition for the data tag "<companyhouseurl>", the test could be run on a different web page.

To allow the engine to locate the objects within an html document, a repository file can be provided by the developer, prior to the writing of the test script. Such a file for the exemplary scenarios above, using the XPath syntax, could appear as follows:

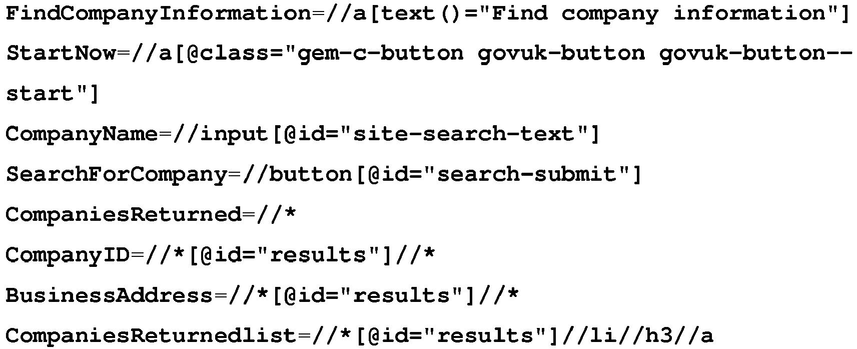

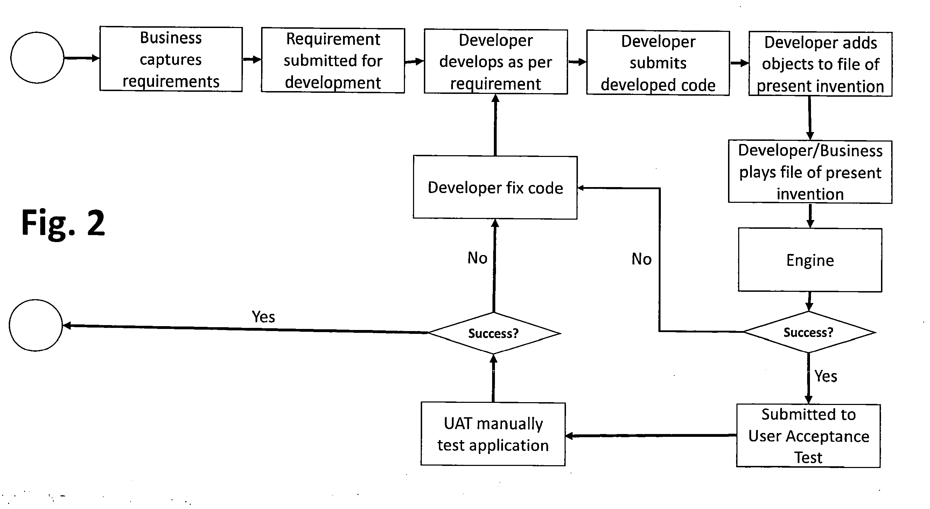

Figure 2 shows how the invention is performed as part of the development of a web-based process. Comparing this with Figure 1, it will be seen that the test engineer is no longer required. The non-technical user composes one or more scripts of the type exemplified above, runs them directly on the engine of the invention and receives the results. The invention therefore provides faster and more efficient testing of web-based processes.

## Claims

1. An automated method of testing a web-based process, comprising the steps of:
- receiving a set of instructions from a human, the instructions comprising: a plurality of natural language operational tags, each defining an operation to be performed; and a plurality of natural language objects, each defining an element of a document presented for interaction, each operational tag being associated with one of the objects;
- extracting said operational tags and said objects from the instructions;
- performing the operations defined by the operational tags on the elements defined by the objects that are respectively associated with the operational tags, and
- returning a result of at least one of the operations defined by the operational tags.

2. A method according to claim 1, wherein the operations defined by the natural language operational tags include one or more of: navigating, selecting, actuating, or verifying the presence of a document element.

3. A method according to claim 1 or 2, wherein the elements defined by the objects include one or more of: an address of a document, a hyperlink, a button, a text input box, or data generated by one of the operations.

4. A method according to claim 1, 2 or 3, wherein the document is a web page.

5. A method according to any preceding claim, wherein the instructions include test data, for entry into the document.

6. A method according to any preceding claim, wherein the instructions include test data comprising an expected result of an operation.

7. A method according to claim 5 or 6, wherein the test data is presented as one or more data tags within the set of instructions, a test data file being provided to interpret the one or more data tags.

8. A computer program including: a plurality of natural language operational tags, each defining an operation to be performed; and a plurality of natural language objects, each defining an element of a document presented for interaction, each operational tag being associated with one of the objects; such that when the operations defined by the operational tags are performed on the elements defined by the objects that are respectively associated with the operational tags, a result of at least one of the operations defined by the operational tags is returned.

9. A computer program according to claim 8, including test data, for entry into the document.

10. A computer program according to claim 8 or 9, including test data comprising an expected result of an operation.

11. A computer program according to claim 8, 9 or 10, wherein the test data is presented as one or more data tags, the program also including a test data file providing definitions of the one or more data tags.
